Europäisches Patentamt

European Patent Office

Office européen des brevets

(11) Publication number: **0 173 459 B1**

## EUROPEAN PATENT SPECIFICATION

(45) Date of publication of patent specification: **07.08.91**  (51) Int. Cl.⁵: **H04B 7/185**, H04B 7/005

(21) Application number: **85305359.3**

(22) Date of filing: **26.07.85**

(54) Receiver devices in satellite communication systems.

(30) Priority: **31.08.84 JP 182411/84**
**31.08.84 JP 182414/84**

(43) Date of publication of application:
**05.03.86 Bulletin 86/10**

(45) Publication of the grant of the patent:
**07.08.91 Bulletin 91/32**

(84) Designated Contracting States:
**DE FR GB NL**

(56) References cited:
**US-A- 4 272 788**
**US-A- 4 329 675**
**US-A- 4 447 901**

**IEEE TRANSACTIONS ON CONSUMER ELEC-
TRONICS, vol. CE-30, no. 3, August 1984,
pages 265-271, New York, US; T. ARAI et al.:
"Receiver for DBS with digital audio signals"**

(73) Proprietor: **SONY CORPORATION**
**7-35 Kitashinagawa 6-Chome Shinagawa-ku
Tokyo 141(JP)**

(72) Inventor: **Kanno, Masayoshi c/o Sony Cor-
poration
Patents Division 6-7-35 Kitashinagawa
Shinagawa-ku Tokyo 141(JP)**
Inventor: **Hideshima, Yasuhiro c/o Sony Cor-
poration
Patents Division 6-7-35 Kitashinagawa
Shinagawa-ku Tokyo 141(JP)**
Inventor: **Tsurumaru, Shinobu c/o Sony Cor-
poration
Patents Division 6-7-35 Kitashinagawa
Shinagawa-ku Tokyo 141(JP)**
Inventor: **Kanayama, Ikuo c/o Sony Corpora-
tion
Patents Division 6-7-35 Kitashinagawa
Shinagawa-ku Tokyo 141(JP)**

(74) Representative: **Thomas, Christopher Hugo et
al
D Young & Co 10 Staple Inn
London WC1V 7RD(GB)**

## Description

This invention relates to receiver devices in satellite communication systems.

In recent years, information transmission by means of satellite communication systems has become popular due to their speed and extensive range. See 8087 IEEE Transactions on Consumer Electronics CE-30 (1984) Aug., No. 3, New York, USA. Such systems are advantageous for transmitting information, such as video signals, audio signals and data signals to stations world-wide.

In satellite communication systems, information is converted into electromagnetic signals and transmitted to an artificial satellite from a transmitting station. The electromagnetic signals are modulated at a predetermined frequency and amplified for direct reception at receiving stations. Then, the signals are transmitted or distributed from the artificial satellite to the receiving stations. The electromagnetic signals used in satellite communication systems are sub-millimeter wavelength in the super-high frequency band. A super-high frequency signal is however subject to significant absorption by mist and rain due to the short wavelength. Therefore, in conventional satellite communication systems, the C/N ratio decreases during heavy rain and other severe weather. In the worst cases, the transmitted information may be completely lost in the noise.

There have been various prior proposals for resolving this problem. In one approach, variable-mode data transmission has been attempted. In variable-mode data transmission, data can be transmitted either in a normal mode, which is used under relatively favourable atmospheric conditions and will be referred to hereafter as "clear-sky mode", or another mode, which is affected by atmospheric conditions to a lesser extent and thus ensures at least minimum data transmission, and will be referred to hereafter as "save mode".

In this variable-mode data transmission system, receiving stations are required to recognize the current transmission mode and switch the receiver mode accordingly.

US patent specification US-A-4 447 901 discloses a mode discontinuous circuit which operates by detecting a pilot signal transmitted to discriminate the broadcast mode of a dual-sound broadcast signal. The circuit comprises a demodulator for demodulating a transmitted FM modulated signal, means for deriving signals transmitted in the first and second mode, a mode switch for selective output of signals received in the first or in the second mode, and a detector for detecting the first mode in dependence on the pilot signal and thereupon producing a detector signal for operating the mode switch to derive the first mode.

According to the present invention there is provided a receiver device in a satellite communication system for transmitting information via an artificial satellite in either of two transmission modes, in a first of which a video signal including synchronization signals and a sub-carrier signal which is modulated by an audio and/or a data signal are transmitted in the form of a frequency modulated audio and/or data signal, and in a second of which a frequency modulated audio and/or data signal is transmitted alone; demodulation means for demodulating transmitted frequency modulated signals;

first means for deriving said audio and/or data signal transmitted in said first mode;

second means for deriving said audio and/or said data signal transmitted in said second mode;

third means for deriving said video signal transmitted in said first mode;

first switching means, associated with said first and second means, for selectively deriving the output of one of said first and second means;

second switching means, associated with said third means, for deriving the output of said third means; and

detector means for detecting said first mode, said detector means producing a detector signal for operating said first and second switching means to supply the outputs from said first means and said third means when said first transmission mode from said satellite is detected.

The invention will now be described by way of example with reference to the accompanying drawings, throughout which like parts are referred to by like references, and in which:

Figure 1 is a schematic block diagram of the overall arrangement of an embodiment of a receiver device according to the invention;

Figure 2 is a block diagram of a part of the receiver device of Figure 1 performing mode selection;

Figures 3A and 3B illustrate the relationship between frequency and response in the clear-sky mode and the save mode, respectively;

Figure 4 is a diagram of the data structure of signals transmitted in the save mode;

Figure 5 is a diagram explaining 4-phase PSK modulation;

Figure 6 is a graph of sensitivity in the clear-sky mode and the save mode; and

Figure 7 is a block diagram of part of a second embodiment of receiver device according to the invention.

In order to facilitate better understanding of the embodiments of receiver device according to the invention to be described below, the general concepts and operation of a dual-mode satellite communication system will first be briefly described.

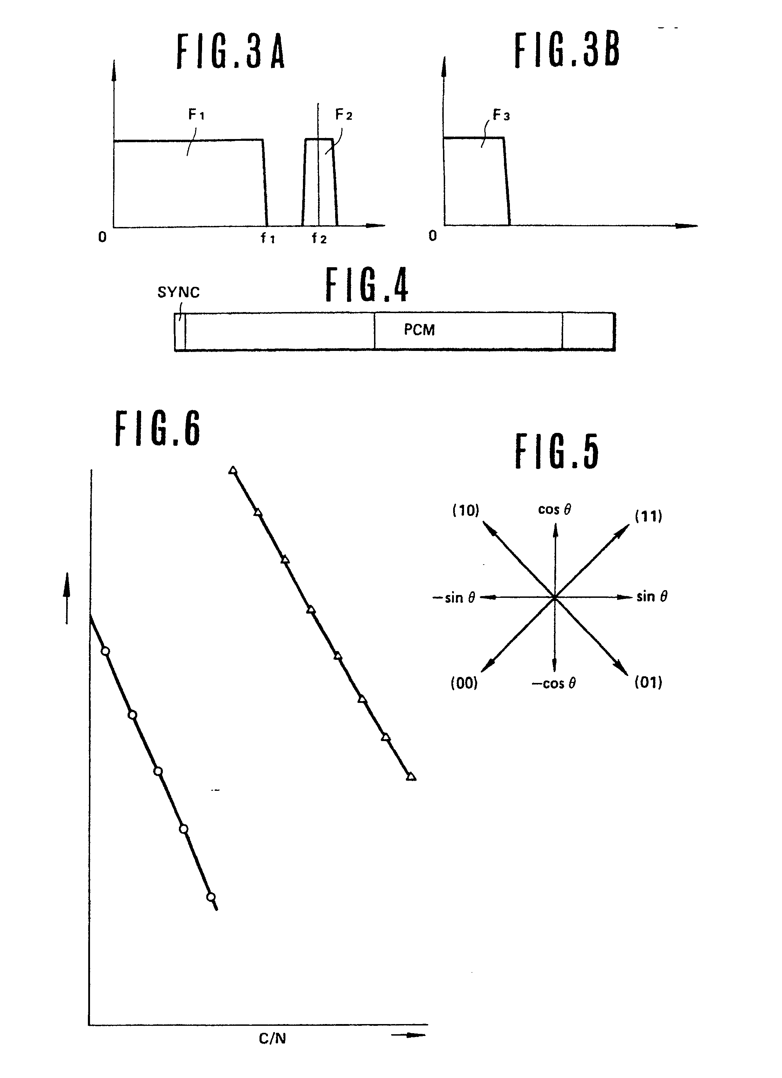

In dual-mode satellite communication systems, the transmission mode is selected to be either a clear-sky mode in which image signals, audio signals and data signals are transmitted to the receiver device, or a save mode in which only audio signals and data signals are transmitted. As will be appreciated from Figures 3A and 3B, both an image signal F1 and a 4-phase PSK modulated audio and data signal F2 are transmitted in the clear-sky mode. On the other hand, in the save mode, an audio and data signal F3 is transmitted in the 2 MHz band.

In more detail, the image signal F1 transmitted in the clear-sky mode is a colour-video signal with a maximum modulation frequency f1 of approximately 4.5 MHz. On the other hand, the audio signal is a 2-channel, pulse code modulated (PCM) signal with 16 bits of information per channel. The sampling frequency fs of the audio signal is 48 KHz. This PCM audio signal is augmented with auxiliary alphanumeric data which will be referred to hereafter as "data" or "auxiliary data". The auxiliary data is encoded in the audio signal data in the manner shown in Figure 4. The auxiliary data packet may, for example, include 24 bits. The save mode data signal also includes a synchronization bit and seven parity bits.

The audio and auxiliary data signal is 4-phase PSK modulated on the 5.727 MHz sub-carrier wave.

4-phase PSK modulated is performed by dividing data into blocks of two bits of data each. The four possible binary permutations are then encoded in two trigonometric terms of phase shift of the carrier, as shown in Figure 5. In practice, when the data value is (1, 1), the sine-wave signal phase is $(\sin \theta + \cos \theta)$; when the data value is (1, 0), the signal phase of the sine-wave signal is $(\cos \theta - \sin \theta)$; when the data value is (0, 1), the signal phase of the sine-wave signal is $(\sin \theta - \cos \theta)$; and when the data value is (0, 0), the signal phase of the sine wave is $(-\sin \theta - \cos \theta)$.

In the save mode, 4-phase PSK modulation is not performed. The audio and data signal F2 are simply frequency modulated for transmission.

When the satellite transmission is working in the clear-sky mode, the combined image signal F1 and 4-phase PSK modulated audio and data signal F2 are frequency modulated. The transmitting station converts the combined frequency modulated signal to a frequency of 14 GHz, for example, and transmits it to the artificial satellite. On the other hand, in the save mode, the frequency modulated audio and data signals as frequency-converted to 14 GHz and transmitted to the satellite.

The satellite receives the transmitted 14-GHz signal and converts the signal into a 12-GHz signal. The satellite transmits the frequency-converted 12-GHz signal to the receiving stations via an amplifier which amplifies the transmitting signal sufficiently to allow the receiving stations to receive the transmitted signal directly.

In the save mode, since only the audio signal data and the auxiliary data are transmitted, less power is required than in the clear-sky mode, in which electric power for transmission of the image data is also required. In addition, the transmission band in the save mode is narrower than in the clear-sky mode. As a result, triangular noise due to frequency modulation will be suppressed. Therefore, as shown in Figure 6, the error rate in audio signal data and auxiliary data transmission can be reduced even when the C/N ratio is relatively low. In Figure 6, the horizontal axis represents the C/N ratio of the received signal, and the vertical axis represents the error rate. The curve outlined in triangular marks shows the error rate in the clear-sky mode and the curve with circular marks shows the error rate in the save mode. As will be appreciated from Figure 6, since the error rate in the save mode is significantly lower than in the clear-sky mode, information transmission can be performed in the save mode even under bad atmospheric conditions in which data transmission in the clear-sky mode would be difficult or impossible.

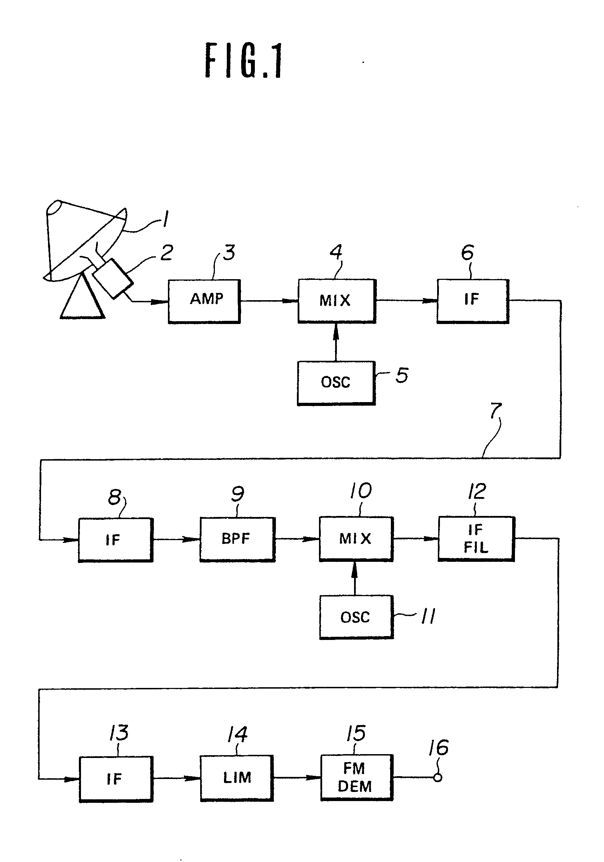

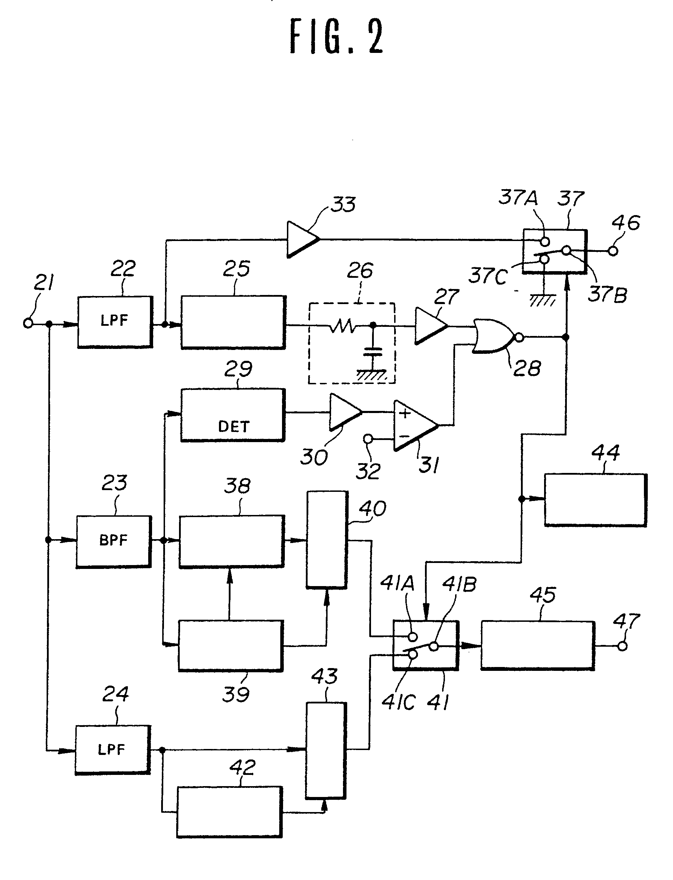

Referring now to Figures 1 and 2, the satellite information receiver system includes an antenna 1 which comprises a main reflector, an auxiliary reflector and an electromagnetic horn. A circular polarized wave converter 2 is connected to the electromagnetic horn in the antenna 1.

The wave converter 2 has a dielectric disposed within a cylindrical waveguide canted at an angle of 45° with respect to the plane of polarization of a plane-polarized wave. The wave converter 2 receives the circular polarized wave transmitted by an artificial satellite (not shown) through the antenna 1 and converts the received circular polarized wave into a plane-polarized wave. The wave converter 2 is connected to a super-high frequency amplifier 3 via a rectangular waveguide, a coaxial cable and a converter (not shown). The amplifier 3 supplies an amplified signal to a mixer 4.

A first local oscillator 5 supplies a local frequency signal to the mixer 4. The mixer 4 supplies a first intermediate frequency signal, derived by mixing the first local frequency signal and the plane-polarized signal from the amplifier 3, to a first intermediate wave amplifier 6.

In practice, the antenna 1, the wave converter 2, the amplifier 3, the mixer 4, the first local oscillator 5 and the amplifier 6 will be installed outdoors at the receiving station. The amplifier 6 is connected to another first intermediate frequency amplifier 8 which is included in an indoor unit, via a coaxial cable 7. The output of the amplifier 8 is connected to a variable band-pass filter 9. The band-pass filter 9 is designed selectively to pass a desired narrow frequency band to a mixer 10. The mixer 10 is also connected to receive a second local frequency signal from a second local oscillator 11. The mixer 10 mixes the desired signal passed by the band-pass filter 9 with the local frequency signal from the local oscillator 11 to produce a second intermediate frequency signal. The mixer 10 feeds the second intermediate frequency signal to a second intermediate frequency band-pass filter 12 and then a second intermediate frequency amplifier 13 and a limiter 14. The output of the limiter 14 is connected to a frequency demodulator 15. The demodulator 15 comprises a PLL demodulator loop filter the characteristics of which are adjustable according to the transmission mode. The demodulated output of the demodulator 15 is supplied to an output terminal 16.

Figure 2 shows a first mode selection circuit. An input terminal 21 is connected to the output terminal 16 in Figure 1 and to low-pass filters 22 and 24, and a band-pass filter 23. The low-pass filter 22 has a cut-off frequency of, for example 4.5 MHz, designed to pass the image signal F1 to be transmitted in the clear-sky mode. The band-pass filter 23 is designed to pass a frequency band centred at about 5.727 MHz to pass the 4-phase PSK modulated audio and data signal F2. The low-pass filter 24 has a cut-off frequency of for example 2 MHz so as to pass the audio and data signal F3 to be transmitted in the save mode.

The low-pass filter 22 is connected to a synchronization signal separator circuit 25 and also to a buffer amplifier 33. The output of the buffer amplifier 33 is connected to a switching circuit 37. The output of the sync separator circuit 25 is connected to a buffer amplifier 27 via a noise-suppression integrator circuit 26. The output of the buffer amplifier 27 is connected to one input of a NOR gate 28.

The band-pass filter 23 is connected to a bit-clock reproduction circuit 39, a demodulation circuit 38 and a peak detector 29, the output of which is connected to the non-inverting input of a comparator 31 via a buffer amplifier 30. The other input terminal (the inverting terminal) of the comparator 31 is connected to a reference voltage source terminal 32 to receive a reference voltage. The output of the comparator 31 is connected to the other input of the NOR gate 28. The output of the NOR gate 28 is connected to the control terminal of the switching circuit 37. The switching circuit 37 includes a movable switching element 37B movable between two stationary terminals 37A and 37C which are respectively connected to the amplifier 33 and to ground. The output of the NOR gate 28 is also connected to the control terminal of a switching circuit 41 which has a movable switching element 41B switching between two stationary terminals 41A and 41C which are respectively connected to a latch circuit 40 connected in turn, to the demodulation circuit 38, and to a latch circuit 43. The latch circuit 43 receives inputs from the low-pass filter 24 and from a bit clock reproducing circuit 42. The latch circuit 40 also receives an input from the bit clock reproducing circuit 39. The bit clock reproducing circuits 39 and 42 receive the audio and data signals F2 and F3 passing through the corresponding band-pass filter 23 and low-pass filter 24 respectively, count the encoded bits, and signal the corresponding latch circuits 40 and 43 to sample and hold the signal information.

A mode indicator 44 also receives an input from the NOR gate 28 to indicate which operating mode of the receiver device is current, depending upon the output level of the NOR gate 28. In addition, although not shown, the output of the NOR gate 28 is connected to the demodulator 15 to serve as a switching signal for the PLL filter.

As set forth above, the image signal is transmitted from the satellite to the receiver devices only in the clear-sky mode. Thus, synchronization signals will be resolved by the sync separator circuit 25 only when data transmission is being carried out in the clear-sky mode. When information transmission is performed in the clear-sky mode, the input level at one of the input terminals of the NOR gate 28 will go HIGH due to the HIGH-level output of the sync separator circuit 25. At the same time, the sub-carrier is 4-phase PSK modulated by the audio and the data signal F2 in the clear-sky mode. On the other hand, in the save mode, only the audio and the data signal F3 is frequency modulated and transmitted. Therefore, the amplitude of the sub-carrier will boost the output of the peak detector 29 only in the clear-sky mode. The reference signal from the reference voltage source 32 is selected smaller than the output of the amplifier 30 in the presence of the sub-carrier and greater than the output of the amplifier 30 otherwise. As a result, the output of the comparator 31 goes HIGH only in the clear-sky mode.

The output of the NOR gate 28 normally remains HIGH and goes LOW in response to a HIGH-level input at either or both of its input terminals. This means that when the output of the sync separator circuit 25 and/or the output of the comparator 31 are HIGH, the output of the NOR gate 28 becomes high, and the clear-sky mode data transmission is recognized.

The switching element 37B of the switching circuit 37 is normally held in engagement with the stationary terminal 37C to disconnect the low-pass filter 22 from an output terminal 46. In response to a LOW-level output from the NOR gate 28, the switching element 37B switches to engage the stationary terminal 37A to connect the low-pass filter 22 to the output terminal 46. In this condition, the video signal passed through the low-pass filter 22 passes through the output terminal 46.'

As long as the output of the NOR gate 28 remains HIGH, the mode indicator 44 continues to indicate save mode data transmission. The mode indicator 44 indicates the clear sky mode, when the output of the NOR gate 28 is LOW-level. In practice, the mode indicator 44 may indicate the data transmission mode in an ON/OFF manner. For example, the mode indicator 44 may remain ON as long as the output of the NOR gate 28 remain HIGH and go OFF when the output of the NOR gate goes LOW.

Similarly, the switching element 41B of the switching circuit 41 is normally held in the position in which it connects the latch circuit 43 to a signal processing circuit 45 which performs known signal processing operations such as error correction. The switching circuit 41 is responsive to a LOW-level input from the NOR gate 28 to switch the switching element 41B to engage with the stationary terminal 41A so as to connect the latch circuit 40 to the signal processing circuit 45.

Therefore, when the transmission is performed in the clear-sky mode, the video signal F1 passed through the low-pass filter 22, is amplified by the buffer amplifier 33 and passes through the switching circuit 37, in which the switching element 37B is held in engagement with the stationary terminal 37A, to the output terminal 46. At the same time, the audio and data signal F2 transmitted in the form of a 4-phase PSK modulated signal, passes through the band-pass filter 23. The audio and data signal F2 is fed to the demodulator 38 and to the bit clock generator 39. The bit clock generator 39 feeds its output to the demodulator 38. The demodulator 38 performs 4-phase PSK demodulation and feeds its output to the latch circuit 40. The latch circuit 40 is, in turn, connected to the bit clock reproducing circuit 39 to receive the bit clock. The latch circuit 40 retains the PCM audio data and the auxiliary data for supply to the signal processing circuit 45 through the switching circuit 41, in which the switching element 41B is held in engagement with the stationary terminal 41A.

Although not shown in the drawings, the PCM audio data and the auxiliary data are separated in a known manner. After separation from the auxiliary data, the PCM audio data are converted into an analog audio signal for audio reproduction.

When data transmission is performed in the save mode, the output of the NOR gate 28 remains HIGH. Therefore, as set forth above, the switching circuit 37 disconnects the low-pass filter 22 from the output terminal 46. On the other hand, the switching element 41B of the switching circuit 41 is moved into engagement with the stationary terminal 41C to connect the latch circuit 43 to the signal procesing circuit 45. The latch circuit 43 is, in turn, connected to the low-pass filter 24. The bit clock reproducing circuit 42 is also connected to the low-pass filter 24 to receive the frequency modulated audio and data signal F3 and feeds the bit clock to the latch circuit 43. Similarly to the above, the PCM audio data and the auxiliary data are held for later supply by the latch circuit 43. In this case, since the switching element 41B of the switching circuit 41 engages with the stationary terminal 41A in response to a LOW-level output from the NOR gate 28, the output of the latch circuit 40 is supplied to the signal processing circuit 45, and then supplied to an output terminal 47.

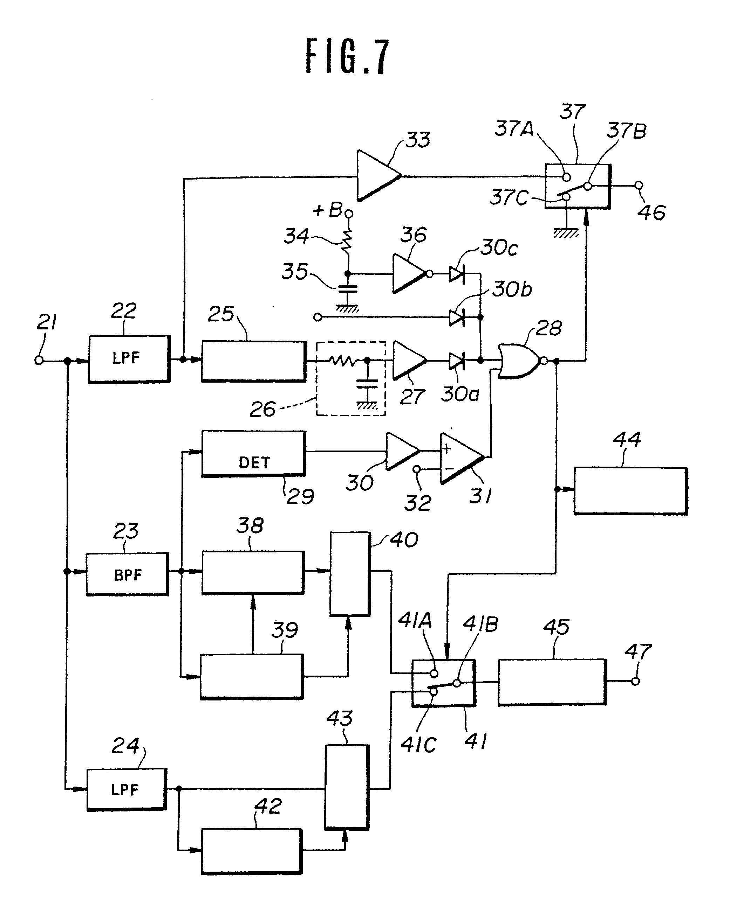

Figure 7 shows part of the second embodiment of the receiver device according to the invention. Elements in the second embodiment which have already been described with reference to the first embodiment and which operate in substantially the same manner as described above will be referred to by the same reference numerals. In this embodiment, the receiver device also operates in the clear-sky mode during an antenna setting operation by which the direction of the antenna of the receiver is adjusted so as to find the best antenna position for highest sensitivity.

Referring to Figure 7, a diode 30a is inserted between the amplifier 27 and the NOR gate 28. The cathode of the diode 30a is connected in common with the cathodes of diodes 30b and 30c. The commonly connected cathodes of the diodes 30a, 30b and 30c are connected to one input terminal of the NOR gate 28. The diodes 30a, 30b and 30c function as an OR gate.

A terminal 32 receives a command for the antenna setting operation, which command is produced and transmitted at a known timing and in a known manner. During the antenna setting operation mode, the antenna 1 of Figure 1 is driven to change direction in order to find the best direction for optimum sensitivity. The antenna setting operation command is HIGH when the direction of the antenna 1 is to be adjusted. During the antenna setting operation, the antenna 1 scans the transmitted signal levels in every direction. The input signal level at the antenna 1 is displayed on a video monitor screen, such as a CRT (not shown), in the form of a bar graph. Since the antenna setting operation mode command is HIGH, the input at the anode of the diode 30b goes HIGH. Therefore, the input level of the NOR gate 28 is HIGH, turning the output of the NOR gate 28 LOW.

The anode of the diode 30c is connected to a power source terminal +B via a resistor 34 and an inverter 36. The power source terminal +B is, in turn, connected to ground via the resistor 34 and a capacitor 35. The junction between the resistor 34 and the capacitor 35 is connected to the input terminal of the inverter 36. When the power supply is switched on, the capacitor 35 is at first charged to a predetermined potential. During this period in which the potential of the capacitor 35 is lower than the predetermined potential, the input level at the input terminal of the inverter 36 remains LOW. Therefore, the output of the inverter 36 applied to the anode of the diode 30c remains HIGH. Thus, the diode 30c sends a HIGH-level output to the NOR gate 28 to make the output level thereof LOW. In practice, the time constant of the capacitor 35 may be set to about 2 or 3 seconds.

As will be appreciated, the second embodiment of receiver device operates in the clear-sky mode during the antenna setting operation mode and during a given period which is defined by the time constant of the capacitor 35, which prevents erroneous selection of the save mode due to excessively low initial power levels, which would also adversely effect the sync separator circuit 25 and the peak detector 29.

Thus with the described embodiments, selection between the clear-sky mode and the save mode can be performed accurately in order to avoid an unfavourable C/N ratio. Furthermore, performing satellite transmission in dual-mode, that is clear-sky mode and save mode, ensures transmission of a minimum of data even when atmospheric conditions are unfavourable.

## Claims

1. A receiver device in a satellite communication system for transmitting information via an artificial satellite in either of two transmission modes, in a first of which a video signal including synchronization signals and a sub-carrier signal which is modulated by an audio and/or a data signal are transmitted in the form of a frequency modulated audio and/or data signal, and in a second of which a frequency modulated audio and/or data signal is transmitted alone;
    demodulation means (15) for demodulating transmitted frequency modulated signals;
    first means (23) for deriving said audio and/or data signal transmitted in said first mode;
    second means (24) for deriving said audio and/or said data signal transmitted in said second mode;
    third means (22) for deriving said video signal transmitted in said first mode;
    first switching means (41), associated with said first and second means (23, 24), for selectively deriving the output of one of said first and second means (23, 24);
    second switching means (37), associated with said third means (22), for deriving the output of said third means (22); and
    detector means (25, 29) for detecting said first mode, said detector means (25, 29) producing a detector signal for operating said first and second switching means (41, 37) to supply the outputs from said first means (23) and said third means (22) when said first transmission mode from said satellite is detected.

2. A receiver device according to claim 1 wherein said detector means (25, 29) detects said synchronization signals in said video signal.

3. A receiver device according to claim 1 wherein said detector means (25, 29) detects said sub-carrier signal.

4. A receiver device according to claim 1 wherein said detector means (25, 29) detects said synchronization signal in said video signal and said sub-carrier signal in said first mode.

5. A receiver device according to claim 1 wherein said first and second switching means (41, 37) supply the outputs of said first means (23) and said third means (22) by a command signal ordering adjustment of an antenna (1) to the direction at which the best sensitivity is obtained in said first mode.

6. A receiver device according to claim 1 wherein said first and second switching means (41, 37) are responsive to the switching on of a power supply to enable said first means (23) and said third means (22).

7. A receiver device according to claim 6 wherein said first and second switching means (41, 37) derive the output of said first means (23) and said third means (22) for a given period of time after the switching on of said power supply regardless of the transmission mode of said satellite communication system.

## Revendications

1. Dispositif récepteur d'un système de télécommunication par satellite permettant d'émettre une information via un satellite artificiel dans l'un ou l'autre de deux modes d'émission, dans un premier desquels un signal vidéo comportant des signaux de synchronisation et un signal de sous-porteuse qui est modulé par un signal audio et, ou bien, un signal de données sont émis sous la forme d'un signal audio et, ou bien, de données modulé en fréquence, et dans un deuxième desquels un signal audio et, ou bien, de données modulé en fréquence est émis seul ;
un moyen de démodulation (15) servant à démoduler des signaux modulés en fréquence émis ;
un premier moyen (23) servant à extraire ledit signal audio et, ou bien, de données émis dans ledit premier mode ;
un deuxième moyen (24) servant à extraire ledit signal audio et, ou bien, de données émis dans ledit deuxième mode ;
un troisième moyen (22) servant à extraire ledit signal vidéo émis dans ledit premier mode ;
un premier moyen de commutation (41), associé auxdits premier et deuxième moyen (23, 24), et servant à extraire sélectivement le signal de sortie de l'un desdits premier et deuxième moyens (23, 24) ;
un deuxième moyen (37), associé audit troisième moyen (22), et servant à extraire le signal de sortie dudit troisième moyen (22) ; et
un moyen détecteur (25, 29) servant à détecter ledit premier mode, ledit moyen détecteur (25, 29) produisant un signal de détecteur afin d'amener lesdits premier et deuxième moyens de commutation (41, 37) à délivrer les signaux de sortie dudit premier moyen (23) et dudit troisième moyen (22) lorsque ledit premier mode d'émission en provenance dudit satellite est détecté.

2. Dispositif récepteur selon la revendication 1, où ledit moyen détecteur (25, 29) détecte lesdits signaux de synchronisation dans ledit signal vidéo.

3. Dispositif récepteur selon la revendication 1, où ledit moyen détecteur (25, 29) détecte ledit signal de sous-porteuse.

4. Dispositif récepteur selon la revendication 1, où ledit moyen détecteur (25, 29) détecte lesdits signaux de synchronisation dudit signal vidéo et ledit signal de sous-porteuse dans ledit premier mode.

5. Dispositif récepteur selon la revendication 1, où lesdits premier et deuxième moyens de commutation (41, 37) délivrent les signaux de sortie dudit premier moyen (23) et dudit troisième moyen (22) sous commande d'un signal d'instruction ordonnant le réglage d'une antenne (1) sur la direction pour laquelle la meilleure sensibilité est obtenue dans ledit premier mode.

6. Dispositif récepteur selon la revendication 1, où lesdits premier et deuxième moyens de commutation (41, 37) répondent à la commutation en service d'une alimentation électrique en validant ledit premier moyen (23) et ledit troisième moyen (22).

7. Dispositif récepteur selon la revendication 6, où lesdits premier et deuxième moyens de oommutation (41, 37) extraient le signal de sortie dudit premier moyen (23) et dudit troisième moyen (22) pendant une durée donnée après la commutation en service de ladite alimentation électrique indépendamment du mode d'émission dudit système de télécommunication par satellite.

**Patentansprüche**

1. Empfängeranordnung in einem Satellitenübertragungssystem zum Senden von Information über einen künstlichen Satelliten in einer von zwei Sende-Betriebsarten, wobei in einer ersten derselben ein Videosignal, das Synchronisierungssignale und ein Hilfsträgersignal enhält, welches durch ein Audio- und/oder ein Datensignal moduliert ist, in Form eines frequenzmodulierten Audio- und/oder Datensignals gesendet wird und in einer zweiten derselben ein frequenzmoduliertes Audio- und/oder Datensignal allein gesendet wird, mit einem Demodulationsmittel (15) zum Demodulieren gesendeter frequenzmodulierter Signale, einem ersten Mittel (23) zum Ableiten des Audio- und/oder Datensignals, das in der ersten Betriebsart gesendet wird, einem zweiten Mittel (24) zum Ableiten des Audio- und/ oder Datensignals, das in der zweiten Betriebsart gesendet wird, einem dritten Mittel (22) zum Ableiten des Videosignals, das in der ersten Betriebsart gesendet wird, einem ersten Schaltmittel (41), das dem ersten und dem zweiten Mittel (23, 24) zum selektiven Ableiten des Ausgangssignals des ersten oder des zweiten Mittels (23, 24) zugeordnet ist, einem zweiten Schaltmittel (37), das dem dritten Mittel (22) zum Ableiten des Ausgangssignals des dritten Mittels (22) zugeordnet ist, und Erfassungsmitteln (25, 29) zum Erfassen der ersten Betriebsart, wobei die Erfassungsmittel (25, 29) ein Erfassungssignal zum Betätigen des ersten und des zweiten Schaltmittels (41, 37) erzeugen, um die Ausgangssignale aus dem ersten Mittel (23) und dem dritten Mittel (22) zu liefern, wenn die erste Sende-Betriebsart des Satelliten erfaßt ist.

2. Empfängeranordnung nach Anspruch 1, bei der das Erfassungsmittel (25, 29) die Synchronisierungssignale in dem Videosignal erfaßt.

3. Empfängeranordnung nach Anspruch 1, bei der das Erfassungsmittel (25, 29) das Hilfsträgersignal erfaßt.

4. Empfängeranordnung nach Anspruch 1, bei der das Erfassungsmittel (25, 29) das Synchronisierungssignal in dem Videosignal und das Hilfsträgersignal in der ersten Betriebsart erfaßt.

5. Empfängeranordnung nach Anspruch 1, bei der das erste und das zweite Schaltmittel (41, 37) die Ausgangssignale des ersten Mittels (23) und des dritten Mittels (22) durch ein Befehlssignal liefern, das die Einstellung einer Antenne (1) in die Richtung befiehlt, in der die beste Empfindlichkeit in der ersten Betriebsart erzielt wird.

6. Empfängeranordnung nach Anspruch 1, bei der das erste und das zweite Schaltmittel (41, 37) auf das Einschalten einer Stromversorgung zum Betriebsbereitschalten des ersten Mittels (23) und des dritten Mittels (22) hin reagieren.

7. Empfängeranordnung nach Anspruch 6, bei der das erste und das zweite Schaltmittel (41, 37) die Ausgangssignale des ersten Mittels (23) und des dritten Mittels (22) für eine gegebene Zeitperiode nach dem Einschalten der Stromversorgung ohne Rücksicht auf die Sende-Betriebsart des Satellitenübertragungssystems ableiten.

# FIG.1

# FIG. 2

# FIG.3A

F₁

F₂

0    f₁   f₂

# FIG.3B

F₃

0

# FIG.4

SYNC

PCM

# FIG.6

C/N

# FIG.5

(10)    cos θ    (11)

−sin θ        sin θ

(00)    −cos θ    (01)

EP 0 173 459 B1

# FIG.7

12